# EUROPEAN PATENT SPECIFICATION

(11) **EP 3 731 194 B1**
(45) Date of publication and mention of the grant of the patent: **01.05.2024**
(21) Application number: 19815522.8
(22) Date of filing: 06.03.2019
(51) Int. Cl.: G07G 1/00, G07C 9/00, G06K 7/10

(54) **DATA PROCESSING METHOD AND DEVICE, AND ARTICLE DETECTION METHOD AND DEVICE**
VERFAHREN UND VORRICHTUNG ZUR DATENVERARBEITUNG SOWIE VERFAHREN UND VORRICHTUNG ZUR ARTIKELERKENNUNG
PROCÉDÉ ET DISPOSITIF DE TRAITEMENT DE DONNÉES, ET PROCÉDÉ ET DISPOSITIF DE DÉTECTION D'ARTICLE

(30) Priority: 05.06.2018 CN 201810567179
(43) Date of publication of application: 28.10.2020
(73) Proprietor: Advanced New Technologies Co., Ltd., George Town, Grand Cayman KY1-9008 (KY)
(72) Inventor: JIANG, Shiqi, Hangzhou, Zhejiang 311121 (CN); YANG, Lei, Hangzhou, Zhejiang 311121 (CN); ZHANG, Hong, Hangzhou, Zhejiang 311121 (CN)
(74) Representative: Boult Wade Tennant LLP
(86) International application number: PCT/CN2019/077142
(87) International publication number: WO 2019/233146

(56) References cited:
- CN-A- 103 679 442
- CN-A- 107 862 360
- CN-A- 108 922 079
- US-A- 6 150 921
- US-A1- 2002 165 758
- US-A1- 2009 102 610
- US-A1- 2010 148 985
- US-A1- 2013 015 959
- US-A1- 2013 296 041
- US-A1- 2017 372 562
- SWADHIN PRADHAN ET AL: "Konark", WORKSHOP ON PHYSICAL ANALYTICS, ACM, 2 PENN PLAZA, SUITE 701NEW YORKNY10121-0701USA, 19 June 2017 (2017-06-19), pages 19-24, XP058370133, DOI: 10.1145/3092305.3092307 ISBN: 978-1-4503-4958-1

## Description

### TECHNICAL FIELD

The present disclosure relates to the technical field of Internet of Things, and particularly to a method for processing data, a method and an apparatus for detecting an object.

### BACKGROUND

With the widespread application of the Internet of Things technologies, nowadays more and more businesses are joining in deployment of "unmanned retail stores". Unmanned retail is a novel business model in which a consumer completes a purchase without assistance of a salesclerk and cashier. In the unmanned retail store, a detection device detects, after the consumer picks up a goods for purchase, the goods held by the consumer to conduct an autonomous payment process.

For example, a related-art unmanned retail store may be provided with an open checkout gate, which may detect a customer who is leaving the store and the goods held by this customer, and may conduct a verification by referring to a payment and checkout system. The consumer is allowed to leave the store if he/she is verified, otherwise the consumer will not be allowed to leave.

US-A-2010/148985 discloses an apparatus, system and techniques for determining a location of an RFID tag among a population of tags. The system includes an RFID reader with at least one antenna port and a population of RFID tags. The population of tags can be homogenous or heterogeneous. The RFID reader varies its transmit power through one or more antenna ports resulting in a grouping of the RFID tags into clusters. In one embodiment, the reader utilizes multiple antennas to further define RFID tag clusters among the population. Each read tag is then uniquely associated with a defined cluster. Tag agents also can be provided among the population of tags facilitating definition of the clusters.

US-A-6,150,921 discloses a system for tracking mobile tags. Cell controllers with multiple antenna modules generate a carrier signal which is received by the tags. Tags shift the frequency of the carrier signal, modulate an identification code onto it, and transmit the resulting tag signal at randomized intervals. The antennas receive and process the response, and determine the presence of the tags by proximity and triangulation. Distance of a tag from an antenna is calculated by measuring the round trip signal time. The cell controllers send data from the antenna to a host computer. The host computer collects the data and resolves them into positional estimates. Data are archived in a data warehouse, such as an SQL Server.

US-A-2009/102610 discloses a method and apparatus for reading a plurality of RFID tags using a plurality of antennas includes ranking a plurality of antennas based on RFID tags readable, wherein the antenna that can read most RFID tags receives a highest ranking, and the antenna that can read the most RFID tags that were not read by another, higher ranked antenna receives the next highest ranking, progressively until each of the antennas are ranked. During a read operation, the antennas are used in series to read the RFID tags, commencing with using the highest ranking antenna and subsequently using the antennas with progressively lower ranking to read the RFID tags.

US-A-2013/296041 discloses a gaming table device which can determine frauds and human errors. A plurality of antennas for reading medium identification information of the game medium disposed on a game table through a wireless communication are disposed at locations spaced away from each other, and when a first antenna of the plurality of antennas is selected, a second antenna spaced at a predetermined distance from the first antenna of the plurality of antennas is selected.

US-A-2017/372562 discloses a settlement processing apparatus which includes a work table with a first holding area and a second holding area. A first radio tag reader is positioned in the first holding area to read information from a radio tag affixed to an item of merchandise. A second radio tag reader is positioned in the second holding area to read information from a radio tag affixed to an item of merchandise. A processor determines whether a radio tag read by the second radio tag reader was already read by the first radio tag reader. The processor generates a list of merchandise based on the read information obtained by the first and second radio tag readers, and the determination of whether a radio tag read by the second radio tag reader was already read by the first radio tag reader. A display unit displays the generated list.

It should be noted that the above introduction to the technical background is only for the purpose of a clear and complete description of the embodiments of the present disclosure to make it easily understandable by those skilled in the art. The above cannot be considered well-known in the art merely for the fact that they are set forth in the background section of this disclosure.

### SUMMARY

The inventors recognized that the detection devices in the related-art unmanned retail store may be deficient in that they may fail to accurately detect all the goods held by a customer leaving the store, i.e., there may be a miss detection, or, they may confuse goods held by other consumers or other goods in the store with the goods held by the target consumer, i.e., there may be a false detection. In the related art, the problem of false detection or miss detection may be tackled by providing redundant detection devices. However, the additional detection devices will surely result in a cost-up, and in theory the false detection and miss detection can not necessarily suppressed below a desirable limit by providing a plurality of detection devices.

The embodiments of the present disclosure provide a method for processing data, and a method and an apparatus for detecting an object, which can reduce the miss detection and false detection.

According to a first aspect of the embodiments of the present disclosure, there is provided an apparatus for detecting an object, comprising:
a first sensor provided in a first region of an unmanned retail store, wherein the unmanned retail store has different regions comprising said first region and a second region, wherein the first region is a paying region, and the second region is a to-pay region;
a second sensor provided in the second region and configured for collecting tags of target objects in the first region and the second region;
a first processing unit configured to classify the tags of target objects collected by the second sensor, to obtain a first region tag cluster and a second region tag cluster, wherein the first region tag cluster comprises tags of target objects in the first region, and the second region tag cluster comprises tags of target objects in the second region,
wherein the first sensor is configured to detect the tags of the target objects in the first region tag cluster based on a classification result of the first processing unit in order for a payment to be conducted, in the first region, for the target objects in said first region tag cluster,
wherein the apparatus further comprises:
   a third sensor provided in a third region of the unmanned retail store and configured to collect tags of target objects in said third region, wherein said third region is an in-store region;
   a second processing unit configured to determine whether the target objects in said third region have moved based on the tags collected by said third sensor, wherein the second processing unit is further configured to perform a clustering on tags of target objects that have moved, and take a result of the clustering as auxiliary information, and wherein the first processing unit is further configured to filter the tags of the target objects in said first region based on the auxiliary information of the second processing unit, to obtain said first region tag cluster.

According to a second aspect of the embodiments of the present disclosure, there is provided an apparatus according to the first aspect, wherein the apparatus further comprises a reference tag provided in the first region, wherein the first processing unit is further configured to perform a clustering on the collected tags of the target objects based on the reference tag, and classify tags of target objects successfully clustered with the reference tag into the first region tag cluster.

According to a third aspect of the embodiments of the present disclosure, there is provided an apparatus according to the first aspect, wherein the second sensor is an array antenna.

According to a fourth aspect of the embodiments of the present disclosure, there is provided an apparatus according to the second aspect, wherein the first processing unit is further configured to extract signal characteristics of the collected tags of the target objects for clustering.

According to a fifth aspect of the embodiments of the present disclosure, there is provided an apparatus according to the first aspect, wherein the apparatus further comprises:
a fourth sensor provided in the first region and configured to detect entry of person into the first region,
wherein the fourth sensor is further configured to activate the second sensor and/or the first sensor to collect the tags upon detection of entry of person into the first region.

According to a sixth aspect of the embodiments of the present disclosure, there is provided a method for detecting an object, comprising:
collecting, by a second sensor provided in a second region of an unmanned retail store, tags of target objects in a first region and the second region, wherein the unmanned retail store has different regions comprising said first region and the second region, wherein the first region is a paying region, and the second region is a to-pay region;
classifying the tags of the target objects collected by the second sensor, to obtain a first region tag cluster and a second region tag cluster, wherein the first region tag cluster comprises tags of target objects in the first region, and the second region tag cluster comprises tags of target objects in the second region; and
detecting, by a first sensor provided in the first region, the tags of the target objects in the first region tag cluster based on a classification result in order for a payment to be conducted, in the first region, for the target objects in said first region tag cluster.
wherein the method further comprises:
   collecting, by a third sensor provided in a third region of the unmanned retail store, tags of target objects in said third region, wherein said third region is an in-store region;
   determining whether the target objects in said third region have moved based on the tags collected by said third sensor, wherein the method further comprises:
      performing a clustering on tags of target objects that have moved, and taking a result of the clustering as auxiliary information, and wherein classifying the tags of the target objects collected by said second sensor to obtain the first region tag cluster further comprises:
      filtering the tags of the target objects in said first region based on said auxiliary information to obtain said first region tag cluster

According to a seventh aspect of the embodiments of the present disclosure, there is provided a method according to the sixth aspect, wherein the method further comprises:
performing a clustering on the collected tags of the target objects based on a reference tag provided in the first region, and classifying tags of target objects successfully clustered with the reference tag into the first region tag cluster.

According to an eighth aspect of the embodiments of the present disclosure, there is provided a method according to the sixth aspect, wherein the second sensor is an array antenna.

According to a ninth aspect of the embodiments of the present disclosure, there is provided a method according to the seventh aspect, wherein the clustering comprises extracting signal characteristics of the collected tags of the target objects for clustering.

According to a tenth aspect of the embodiments of the present disclosure, there is provided a method according to the sixth aspect, wherein the method further comprises:
detecting, by a fourth sensor provided in the first region, entry of person into the first region; and
activating the second sensor and/or the first sensor to collect tags in response to detection of entry of person into the first region.

The present disclosure is advantageous in that by classifying the target objects detected by sensors into regions, it is possible to identify accurately the objects held by a consumer in a predetermined region, and therefore to reduce the miss detection and false detection.

With reference to the following descriptions and drawings, particular embodiments of the present disclosure will be disclosed in detail to indicate the ways in which the principle of the present disclosure can be implemented. It should be understood that the scope of the embodiments of the present disclosure are not limited thereto.

The features described and/or illustrated with respect to one embodiment may be applied to one or more other embodiments in the same or similar way, may be combined with features in other embodiments, or may be substituted for features in other embodiments.

It should be noted that the term "comprise/include" as used herein refers to the presence of features, entities, steps or components, but does not preclude the presence or addition of one or more other features, entities, steps or components.

### BRIEF DESCRIPTION OF DRAWINGS

In order to describe the technical solutions in the embodiments of the present disclosure or the prior art more clearly, the accompanying drawings for the embodiments or the prior art will be briefly introduced in the following. It is apparent that the accompanying drawings described in the following involve merely some embodiments disclosed in the present disclosure, and those skilled in the art can derive other drawings from these accompanying drawings without creative efforts.
Fig. 1 is a structural diagram of an apparatus for detecting an object according to Embodiment 1 of the present disclosure;
Fig. 2 is a structural diagram of an apparatus for detecting an object according to Embodiment 2 of the present disclosure;
Fig. 3 is a flowchart of a method for detecting an object according to Embodiment 3 of the present disclosure;
Fig. 4 is a flowchart of a method for detecting an object according to Embodiment 3 of the present disclosure;
Fig. 5 is a schematic diagram of an application scenario of Embodiment 3 of the present disclosure;
Fig. 6 is a flowchart of a method for processing date according to Embodiment 4 of the present disclosure;
Fig. 7 is a schematic diagram of an apparatus for processing date according to Embodiment 4 of the present disclosure; and
Fig. 8 is a schematic diagram of a hardware structure of an apparatus for processing date according to Embodiment 4 of the present disclosure.

### DETAILED DESCRIPTION

In order to enable those skilled in the art to better understand the technical solutions in the present disclosure, the technical solutions of the embodiments in the present disclosure will be clearly and comprehensively described in the following with reference to the accompanying drawings. It is apparent that the embodiments as described are merely some, rather than all, of the embodiments of the present disclosure. All other embodiments obtained by those skilled in the art based on one or more embodiments described in the present disclosure without creative efforts should fall within the scope of this disclosure.

In the embodiments of the present disclosure, the terms "first", "second" and the like are used to distinguish the respective elements from each other in terms of appellations, but not to indicate the spatial arrangement or temporal order of these elements, and these elements should not be limited by such terms. The term "and/or" is meant to include any of one or more listed elements and all the possible combinations thereof. The terms "comprise", "include", "have" and the like refer to the presence of stated features, elements, members or components, but do not preclude the presence or addition of one or more other features, elements, members or components.

In the embodiments of the present disclosure, the articles of singular form such as "a", "the" and the like are meant to include plural form, and can be broadly understood as "a type of" or "a class of" instead of being limited to the meaning of "one". The term "said" should be understood as including both singular and plural forms, unless otherwise specifically specified in the context. In addition, the phrase "according to" should be understood as "at least partially according to ...", and the phrase "based on" should be understood as "at least partially based on ...", unless otherwise specifically specified in the context.

In the embodiments of the present disclosure, terms "electronic device" and "terminal device" may be interchangeable and may include all devices such as a mobile phone, a pager, a communication device, an electronic notebook, a personal digital assistant (PDA), a smart phone, a portable communication device, a tablet computer, a personal computer, a server, etc.

The technical terms presented in the embodiments of the present disclosure will be briefly described below for a better understanding.

The embodiments of the present disclosure will be described below with reference to the accompanying drawings.

### Embodiment 1

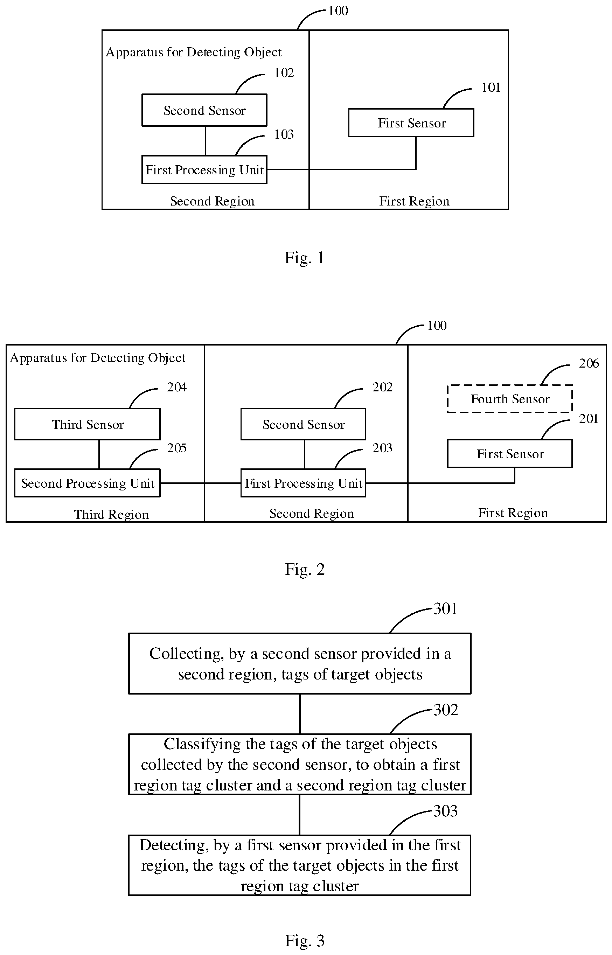

Embodiment 1 of the present disclosure provides an apparatus for detecting an object. Fig. 1 is a schematic diagram of the apparatus. As illustrated in Fig. 1, the apparatus comprises a first sensor 101 provided in a first region, and a second sensor 102 provided in a second region.

The apparatus further comprises a first processing unit 103 configured to classify tags of target objects collected by the second sensor, to obtain a first region tag cluster and a second region tag cluster. The first region tag cluster comprises tags of target objects in the first region, and the second region tag cluster comprises tags of target objects in the second region.

The first sensor 101 is configured to detect the tags of the target objects in the first region tag cluster based on a classification result of the first processing unit 103.

In this embodiment, the apparatus for detecting an object is used in an unmanned retail store for detecting the objects purchased by a consumer. The unmanned retail store comprises a first region and a second region. The first region is a paying region, and the second region is a to-pay region. The second region is provided with the second sensor 102. By conducting a classification on the collected tags of the target objects, the first processing unit 103 identifies target objects that are in the first region, i.e., the objects purchased by the consumer who is doing a payment. The first sensor 101 in the first region collects tags of the target objects in the first region filtered by the first processing unit 103, in order to conduct a payment and checkout process.

In this embodiment, the second sensor 102 may be provided at a top of the second region, and may be a radio frequency identification (RFID) array antenna or a circularly polarized antenna, but this embodiment is not limited thereto, although the following description will be made by taking the RFID array antenna as an example. The tag of the target object may be a radio frequency identification (RFID) tag attached to the target object for identifying it, and the tag may contain attribute information such as name, origin, price, etc. of the target object. Each antenna in the array antenna may emit a beam (i.e., a radio frequency signal) in a predetermined direction for collecting tags of target objects within a coverage of the beam. For example, the radio frequency signal is reflected as it hits onto the tag of the target object, and the array antenna receives the reflected signal which carries relevant information of the tag of the target object.

In this embodiment, since the respective antennas in the array antenna have different positions and emit radio frequency signals in different directions, and the positions of the target objects are also different, the characteristics of the reflected signals received by the array antenna are different. The first processing unit 103 may extract signal characteristics of the collected tags of the target objects from the reflected signals, including signal strength characteristics and/or signal phase characteristics. Since the signal strength characteristics and the signal phase characteristics are correlated with a signal propagation distance, a distance and an azimuth of a tag of a target object relative to the second sensor may be determined from the signal strength characteristics and/or the signal phase characteristics (for details of determining the distance and the azimuth from the signal characteristics, reference can be made to the related art, for example, indoor positioning algorithms such as those based on reflected signal strength (RSSI) fingerprint, the time of arrival (TOA) of the reflected signal, time difference of arrival (TDOA), angle of arrival (AOA), etc. may be adopted, and therefore detailed description is omitted herein). That is, the position of the tag of the target object is determined, and it is determined whether the tag of the target object is in the first region or the second region based on the position, to obtain the first region tag cluster and the second region tag cluster. The first region tag cluster comprises the tags of the target objects in the first region, and the second region tag cluster comprises the tags of the target objects in the second region.

In this embodiment, in order to further reduce the false detection and improve the detection precision, the apparatus may further comprise a reference tag (optional) which is provided in the first region and may also be an RFID tag. Since the reference tag is in the first region, the first processing unit 103 may perform a clustering on the collected tags of the target objects based on the reference tag, and classify tags of target objects successfully clustered with the reference tag into the first region tag cluster. The reference tag may be provided on the first sensor.

In this embodiment, the second sensor 102 may collect the reference tag (the collection method is the same as that described above), the first processing unit 103 may extract signal characteristics of the reference tag, perform a clustering on signal characteristics extracted from the tags in the first region tag cluster with the signal characteristics of the reference tag, and remove the tags for which the clustering fails from the first region tag cluster and move them into the second region tag cluster. In addition, the first processing unit 103 may perform a clustering on signal characteristics extracted from the tags in the second region tag cluster with the signal characteristics of the reference tag, and remove the tags for which the clustering succeeds from the second region tag cluster and move them into the first region tag cluster. In addition, in order to avoid the tags moving back and forth between the clusters, a threshold may be set to ensure that the clustering converges

In this embodiment, for details of the clustering, reference can be made to the related art, and therefore detailed description is omitted herein. For example, the clustering may be performed using a clustering algorithm such as a K-average algorithm or a nearest neighbor algorithm.

In this embodiment, the first sensor 101 provided in the first region (the paying region) may be a sensor for payment and gate control, or any other sensor for checkout. The first sensor 101 detects the tags of the target objects in the first region tag cluster, which may be tags of the objects purchased by the consumer, i.e., the tags of the target objects for which payment is ongoing, and verifies the consumer by referring to a payment and checkout system. If the customer is verified, the sensor for payment and gate control may automatically open the gate to allow the consumer to leave, therefore the purchase in the unmanned retail store is completed.

In this embodiment, the respective units and sensors of the apparatus for detecting an object may communicate data through a network (such as a local area network) connection.

According to this embodiment, by classifying the target objects detected by sensors into regions, it is possible to identify accurately the objects held by a consumer in a predetermined region, and therefore to reduce the miss detection and false detection.

In addition, by providing the reference tag in the predetermined region, and conducting a clustering on other tags collected based on the reference tag, it is possible to further reduce the false detection and improve the detection precision.

### Embodiment 2

Embodiment 2 of the present disclosure provides an apparatus for detecting an object, which is different from Embodiment 1 in that this apparatus for detecting an object may be further provided with a third sensor for an auxiliary detection, so as to further reduce the miss detection and false detection. Fig. 2 is a schematic diagram of the apparatus. As illustrated in Fig. 2, the apparatus comprises a first sensor 201 provided in a first region, and a second sensor 202 provided in a second region.

The apparatus further comprises a first processing unit 203 configured to classify tags of target objects collected by the second sensor, to obtain a first region tag cluster and a second region tag cluster. The first region tag cluster comprises tags of target objects in the first region, and the second region tag cluster comprises tags of target objects in the second region,

The first sensor 201 is configured to detect the tags of the target objects in the first region tag cluster based on a classification result of the first processing unit 203.

In this embodiment, Embodiment 1 can be referred to for details of implementations of the first sensor 201, the second sensor 202, and the first processing unit 203, the contents of which are incorporated herein by reference, and duplicate description is omitted here.

In this embodiment, the apparatus for detecting an object is used in an unmanned retail store for detecting objects purchased by a consumer, and the unmanned retail store comprises a first region, a second region and a third region. The first region is a paying region, the second region is a to-pay region, and the third region is an in-store region.

In this embodiment, the apparatus further comprises:
a third sensor 204 provided in the third region and configured to collect tags of target objects in the third region; and
a second processing unit 205 configured to determine whether the target objects in the third region have moved based on the tags collected by the third sensor 204.

In this embodiment, the third sensor 204 may be a radio frequency identification (RFID) directional antenna for continuously monitoring the tags of the target objects in the third region, and for example, may be provided near a shelf, or near the second region, or across the second region and the third region, and this embodiment is not limited in this respect. The third sensor 204 may monitor tags of target objects on a shelf in the in-store region as a background detection. The second processing unit 205 determines whether the tags of the target objects have moved based on signal characteristics (e.g., signal strength and/or phase) of the collected tags, and specifically, may determine whether the tags have moved based on a variation of signal strength and/or phase with the positioning algorithm described in Embodiment 1.

In this embodiment, the second processing unit 205 performs a clustering on the tags of the target objects that have moved, and take a result of the clustering as an auxiliary information. The implementation of the clustering is similar to that in Embodiment 1, and therefore detailed description is omitted herein.

In this embodiment, the auxiliary information includes the tags of the target objects that have moved. Considering that the target objects in the first region are moved in from the third region, i.e., all the target objects in the first region have moved, if the classified tags of the target objects in the first region are not included in the auxiliary information, those tags not included in the auxiliary information should be removed from the first region tag cluster. In this way, the first processing unit 203 filters the tags of the target objects in the first region based on the auxiliary information to obtain the first region tag cluster. For example, the tags of the target objects that have moved included in the auxiliary information are tags 1, 2, 3 and 4, and the first processing unit 203 determines, according to the Embodiment 1, that the tags of the target objects in the first region are tags 1, 2 and 5, in this case, the tag 5 has to be removed from the first region tag cluster.

In this embodiment, optionally, the apparatus for detecting an obj ect may further comprise:
a fourth sensor 206 (optional) provided in the first region and configured to detect entry of person into the first region,
the fourth sensor is further configured to activate the second sensor and/or the first sensor to collect the tags upon detection of entry of person into the first region.

In this embodiment, the fourth sensor may be provided on the first sensor, and may be an infrared sensor, an ultrasonic sensor or the like. The fourth sensor may function to activate the main detection. In other words, when no entry of person is detected, the respective sensors are put into a background detection state, i.e., an un-activated state, and cache the detected information in local memory, and when entry of person is detected, the sensors are put into an activated state, in particular, the second sensor is activated to detect and determine the first region tag cluster. The detection result may be compared with the detection information cached locally (e.g., the detection information of the background detection of the third sensor and the auxiliary information cached by the third sensor). If the detection turns out to be consistent (no false detection or miss detection), the first sensor may send a request to the network and enter into a payment process. Otherwise, the user may be prompted to change his posture to be detected again by the second sensor and the first sensor.

In this embodiment, the respective units and sensors of the apparatus for detecting an object may communicate data through a network connection.

According to this embodiment, by classifying the target objects detected by sensors into regions, it is possible to identify accurately the objects held by a consumer in a predetermined region, and therefore to reduce the miss detection and false detection. In addition, with the auxiliary detection by the third sensor, it is possible to avoid confusing the target objects purchased by the consumer with the goods on the shelves in the store and therefore avoid false detection. Furthermore, by using the fourth sensor for activating the main detection and by identifying the moved target objects as a reference based on the result of the clustering, it is possible to avoid miss detection.

### Embodiment 3

Embodiment 3 of the present disclosure provides a method for detecting an object. Fig. 3 is a flowchart of the method. As illustrated in Fig. 3, the method comprises:
Step 301: collecting, by a second sensor provided in a second region, tags of target objects;
Step 302: classifying the tags of the target objects collected by the second sensor, to obtain a first region tag cluster and a second region tag cluster, wherein the first region tag cluster comprises tags of target objects in a first region, and the second region tag cluster comprises tags of target objects in the second region; and
Step 303: detecting, by a first sensor provided in the first region, the tags of the target objects in the first region tag cluster.

For implementations of steps 301 to 303 in this embodiment, reference may be made to the first sensor 101, the second sensor 102, and the first processing unit 103 in Embodiment 1, and therefore detailed description is omitted herein.

In this embodiment, in step 302, a clustering may be performed on the collected tags of the target objects based on a reference tag provided in the first region, and tags of target objects successfully clustered with the reference tag are classified into the first region tag cluster. In particular, the clustering may comprise a clustering based on signal characteristics extracted from the collected tags of the target objects.

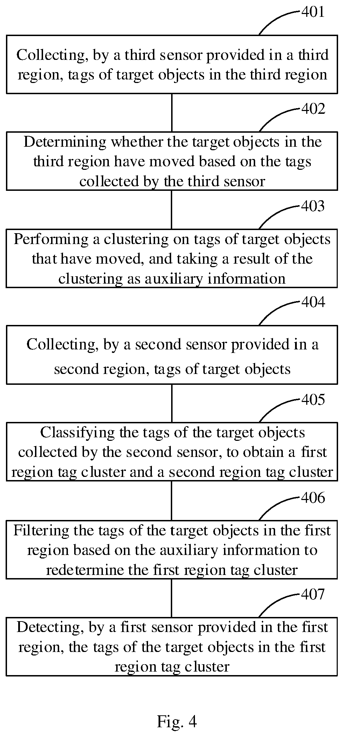

Embodiment 4 of the present disclosure provides a method for detecting an object. Fig. 4 is a flowchart of the method. As illustrated in Fig. 4, the method comprises:
Step 401: collecting, by a third sensor provided in a third region, tags of target objects in the third region;
Step 402: determining whether the target objects in the third region have moved based on the tags collected by the third sensor;
Step 403: performing a clustering on tags of target objects that have moved, and taking a result of the clustering as auxiliary information;
Step 404: collecting, by a second sensor provided in a second region, tags of target objects;
Step 405: classifying the tags of the target objects collected by the second sensor, to obtain a first region tag cluster and a second region tag cluster, wherein the first region tag cluster comprises tags of target objects in a first region, and the second region tag cluster comprises tags of target objects in the second region;
Step 406: filtering the tags of the target objects in the first region based on the auxiliary information to redetermine the first region tag cluster;
Step 407: detecting, by a first sensor provided in the first region, the tags of the target objects in the first region tag cluster.

For implementations of steps 401 to 407 in this embodiment, reference may be made to the apparatus for detecting an object in Embodiment 2, and therefore detailed description is omitted herein.

In this embodiment, before step 404, the method may further comprise (optional and not illustrated):
detecting, by a fourth sensor provided in the first region, entry of person into the first region; and
activating the second sensor and/or the first sensor to collect tags, i.e., to perform steps 404 to 407, in response to detection of entry of person into the first region by the fourth sensor.

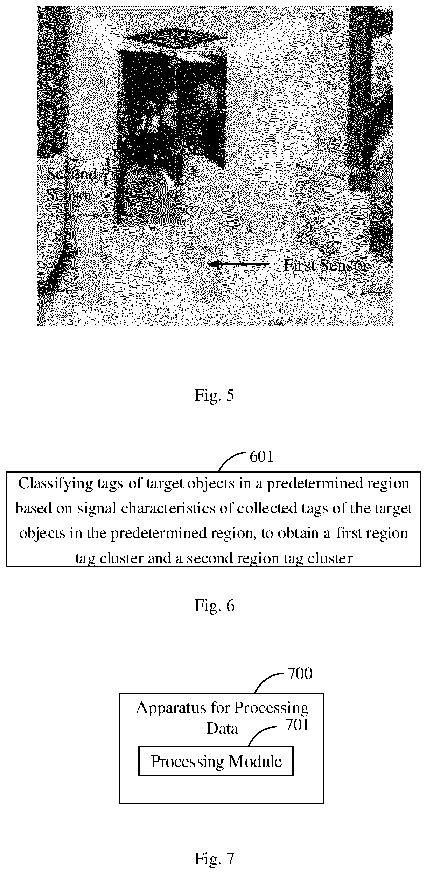

Fig. 5 is a schematic diagram of an application scenario of the apparatus for detecting an object in this embodiment. As illustrated in Fig. 5, the apparatus for detecting an object is applied to an unmanned retail store, the first sensor is a sensor for payment and gate control (provided in the paying region), and the second sensor is an array antenna installed at the top of the to-pay region inside a checkout gate. The target objects are classified into regions based on the tags collected by the second sensor, and then the first sensor 101 detects the tags of the target objects in the paying region, i.e., the tags of the target objects held by the customer who is leaving the store, and verifies the consumer by referring to a payment and checkout system. If the customer is verified, the sensor for payment and gate control may automatically open the gate to allow the consumer to leave, therefore the purchase in the unmanned retail store is completed.

In accordance with the above embodiment, the objects held by the consumer in a predetermined region can be accurately identified, and the miss detection and false detection is suppressed.

In addition, with the auxiliary detection by the third sensor, it is possible to avoid confusing the target objects purchased by the consumer with the goods on the shelves in the store and therefore avoid false detection. In addition, by using the fourth sensor for activating the main detection and by identifying the moved target objects as a reference based on the result of the clustering, it is possible to avoid miss detection.

### Embodiment 4

Embodiment 4 of the present disclosure provides a method for processing data. Fig. 6 is a flowchart of the method. As illustrated in Fig. 6, the method comprises:
Step 601: classifying tags of target objects in a predetermined region based on signal characteristics of collected tags of the target objects in the predetermined region, to obtain a first region tag cluster and a second region tag cluster, wherein the first region tag cluster comprises tags of target objects in a first region, the second region tag cluster comprises tags of target objects in a second region, and the predetermined region comprises the first region and the second region.

In this embodiment, before step 601, the method may further comprise (not illustrated):
determining whether target objects in a third region have moved based on signal characteristics of collected tags of the target objects in the third region;
performing a clustering on tags of target objects that have moved, and taking a result of the clustering as auxiliary information; and
in step 601, re-filtering the tags of the target objects in the first region based on the auxiliary information to obtain the first region tag cluster.

For implementation of the above method in this embodiment, reference may be made to the implementation of the first processing unit and the second processing unit in Embodiment 1 or 2, and therefore detailed description is omitted herein.

### Embodiment 5

Embodiment 5 of the present disclosure provides an apparatus for processing data. Fig. 7 is a structural diagram of the apparatus. As illustrated in Fig. 7, the apparatus comprises:
a processing module 701 configured to classify tags of target objects in a predetermined region based on signal characteristics of collected tags of the target objects in the predetermined region, to obtain a first region tag cluster and a second region tag cluster, wherein the first region tag cluster comprises tags of target objects in a first region, the second region tag cluster comprises tags of target objects in a second region, and the predetermined region comprises the first region and the second region.

In this embodiment, the processing module 701 is further configured to determine whether target objects in a third region have moved based on signal characteristics of collected tags of the target objects in the third region.

In this embodiment, the processing module 701 is further configured to perform a clustering on tags of target objects that have moved, and take a result of the clustering as auxiliary information.

The processing module 701 may re-filter the tags of the target objects in the first region based on the auxiliary information to obtain the first region tag cluster.

For implementation of the processing module 701 in this embodiment, reference may be made to the first processing unit or the second processing unit in Embodiment 1 or 2 and the central processing unit 810 described below, and therefore detailed description is omitted herein.

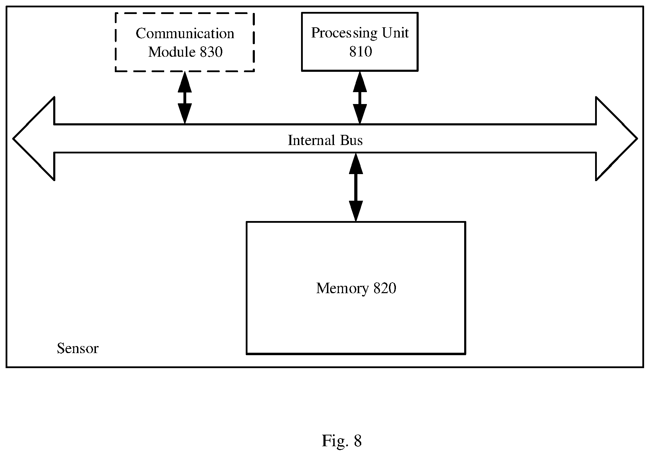

Fig. 8 is a schematic diagram of a hardware structure of an apparatus for processing data. As illustrated in Fig. 8, the apparatus for processing data may comprise an interface (not illustrated), a central processing unit (CPU) 810, and a memory 820 coupled to the central processing unit 810, wherein the memory 820 may store various data. In addition, the memory 820 may also store a program for data processing which is executed under the control of the central processing unit 810, and various preset values, predetermined conditions, and the like.

In one embodiment, some functions of data processing may be integrated into the central processing unit 810, and the central processing unit 810 may be configured to classify tags of target objects in a predetermined region based on signal characteristics of collected tags of the target objects in the predetermined region, to obtain a first region tag cluster and a second region tag cluster. The first region tag cluster comprises tags of target objects in a first region, the second region tag cluster comprises tags of target objects in a second region, and the predetermined region comprises the first region and the second region.

In this embodiment, the central processing unit 810 may be further configured to perform a clustering on the collected tags of the target objects based on a reference tag provided in the first region, and classify tags of target objects successfully clustered with the reference tag into the first region tag cluster.

In this embodiment, the central processing unit 810 may be further configured to determine whether target objects in a third region have moved based on signal characteristics of collected tags of the target objects in the third region; perform a clustering on tags of target objects that have moved, and take a result of the clustering as auxiliary information; and re-filter the tags of the target objects in the first region based on the auxiliary information to obtain the first region tag cluster.

In this embodiment, the central processing unit 810 may be further configured to activate a collection of tags of target objects in a predetermined region upon detection of entry of person into the first region.

It should be noted that the apparatus may further comprise a communication module 830 for receiving signals collected by respective sensors, etc., and for components of which reference may be made to the related art.

This embodiment further provides a computer readable storage medium on which a computer program is stored, wherein the computer program is configured to implement, when being executed, the steps of the method according to Embodiment 4.

It is to be noted that although this disclosure provides operation steps as depicted in the embodiment or flowchart, more or fewer operation steps may be included as necessary without involving creative efforts. The order of the steps as described in the embodiments is merely one of many orders for performing the steps, and rather is not meant to be unique. In practical implementation in an apparatus or a client product, the steps can be either performed in the order depicted in the embodiments or the drawings, or be performed in parallel (for example, in an environment of parallel processors or multi-thread processing).

The apparatus or modules described in the foregoing embodiments can be implemented by a computer chip or entity, or implemented by a product having a specific function. For ease of description, an apparatus is broken down into modules by functionalities to be described respectively. However, in practical implementation, the function of one unit may be implemented in a plurality of software and/or hardware entities, or vice versa, the functions of respective modules may be implemented in a single software and/or hardware entity. Of course, it is also possible to implement a module of a certain function with a plurality of sub-modules or sub-units in combination.

Any method, apparatus or module in the present disclosure may be implemented by means of computer readable program codes. The controller may be implemented in any suitable way. For example, the controller may take the form of, for instance, a microprocessor or processor, and a computer readable medium storing computer readable program codes (e.g., software or firmware) executable by the (micro) processor, a logic gate, a switch, an application-specific integrated circuit (ASIC), a programmable logic controller, and an embedded microcontroller. Examples of the controller include, but not limited to, the microcontrollers such as ARC 625D, Atmel AT91SAM, Microchip PIC18F26K20, and Silicone Labs C8051F320. A memory controller may also be implemented as a part of control logic of the memory. As known to those skilled in the art, in addition to implementing the controller in the form of the pure computer readable program codes, it is definitely possible to embody the method in a program to enable a controller to implement the same functionalities in the form of such as a logic gate, a switch, an application-specific integrated circuit, a programmable logic controller, or an embedded microcontroller. Thus, such a controller may be regarded as a hardware component, while means included therein for implementing respective functions may be regarded as parts in the hardware component. Furthermore, the means for implementing respective functions may be regarded as both software modules that implement the method and parts in the hardware component.

Some modules in the apparatuses of the present disclosure can be described in a general context of a computer executable instruction executed by a computer, for example, a program module. Generally, the program module may include a routine, a program, an object, a component, a data structure, and the like for performing a specific task or implementing a specific abstract data type. The present disclosure may also be implemented in a distributed computing environment. In the distributed computing environment, a task is performed by remote processing devices connected via a communication network. Further, in the distributed computing environment, the program module may be located in local and remote computer storage medium including a storage device.

From the above description of the embodiments, it is clear to persons skilled in the art that the present disclosure may be implemented by means of software plus necessary hardware. In this sense, the technical solutions of the present disclosure can essentially be, or a part thereof that manifests improvements over the prior art can be, embodied in the form of a computer software product or in the process of data migration. The computer software product may be stored in a storage medium such as an ROM/RAM, a magnetic disk, an optical disk, etc. , including several instructions to cause a computer device (e.g., a personal computer, a mobile terminal, a server, or a network device, etc.) to perform the methods described in various embodiments or some parts thereof in the present disclosure.

The embodiments in the present disclosure are described in a progressive manner, which means descriptions of each embodiment are focused on the differences from other embodiments, and the descriptions of the same or similar aspects of the embodiments are applicable to each other. The present disclosure may be wholly or partially used in many general or dedicated computer system environments or configurations, such as a personal computer, a server computer, a handheld device or a portable device, a tablet device, a mobile communication terminal, a multiprocessor system, a microprocessor-based system, a programmable electronic device, a network PC, a minicomputer, a mainframe computer, a distributed computing environments including any of the above systems or devices, etc.

## Claims

1. An apparatus for detecting an object, **characterized by** comprising:
a first sensor (101, 201) provided in a first region of an unmanned retail store, wherein the unmanned retail store has different regions comprising said first region and a second region, wherein the first region is a paying region, and the second region is a to-pay region;
a second sensor (102, 202) provided in the second region and configured for collecting tags of target objects in the first region and the second region;
a first processing unit (103, 203) configured to classify the tags of target objects collected by said second sensor, to obtain a first region tag cluster and a second region tag cluster, wherein said first region tag cluster comprises tags of target objects in said first region, and said second region tag cluster comprises tags of target objects in said second region,
wherein said first sensor (101, 201) is configured to detect the tags of the target objects in said first region tag cluster based on a classification result of said first processing unit (103, 203) in order for a payment to be conducted, in the first region, for the target objects in said first region tag cluster,
wherein the apparatus further comprises:
a third sensor (204) provided in a third region of the unmanned retail store and configured to collect tags of target objects in said third region, wherein said third region is an in-store region;
a second processing unit (205) configured to determine whether the target objects in said third region have moved based on the tags collected by said third sensor, wherein the second processing unit (205) is further configured to perform a clustering on tags of target objects that have moved, and take a result of the clustering as auxiliary information, and wherein the first processing unit (103, 203) is further configured to filter the tags of the target objects in said first region based on the auxiliary information of the second processing unit (205), to obtain said first region tag cluster.

2. The apparatus according to claim 1, further comprising a reference tag provided in said first region, wherein the first processing unit (103, 203) is further configured to perform a clustering on the collected tags of the target objects based on said reference tag, and classify tags of target objects successfully clustered with said reference tag into said first region tag cluster, and preferably, said first processing unit (103, 203) is further configured to extract signal characteristics of the collected tags of the target objects for clustering.

3. The apparatus according to claim 1 or 2, wherein said second sensor (102, 202) is an array antenna.

4. The apparatus according to any one of claims 1 to 3, further comprising:
a fourth sensor (206) provided in the first region and configured to detect entry of person into said first region,
wherein said fourth sensor (206) is further configured to activate said second sensor (102, 202) and/or said first sensor (101, 201) to collect the tags upon detection of entry of person into said first region.

5. A method for detecting an object, **characterized by** comprising:
collecting (301), by a second sensor provided in a second region of an unmanned retail store, tags of target objects in a first region and the second region, wherein the unmanned retail store has different regions comprising said first region and the second region, wherein the first region is a paying region, and the second region is a to-pay region;
classifying (302) the tags of the target objects collected by said second sensor, to obtain a first region tag cluster and a second region tag cluster, wherein said first region tag cluster comprises tags of target objects in the first region, and said second region tag cluster comprises tags of target objects in said second region; and
detecting (303), by a first sensor provided in said first region, the tags of the target objects in said first region tag cluster based on a classification result in order for a payment to be conducted, in the first region, for the target objects in said first region tag cluster,
wherein the method further comprises:
collecting (401), by a third sensor provided in a third region of the unmanned retail store, tags of target objects in said third region, wherein said third region is an in-store region;
determining (402) whether the target objects in said third region have moved based on the tags collected by said third sensor, wherein the method further comprises:
performing (403) a clustering on tags of target objects that have moved, and taking a result of the clustering as auxiliary information, and wherein classifying the tags of the target objects collected by said second sensor to obtain the first region tag cluster further comprises:
filtering the tags of the target objects in said first region based on said auxiliary information to obtain said first region tag cluster.

6. The method according to claim 5, further comprising:
performing a clustering on the collected tags of the target objects based on a reference tag provided in said first region, and classifying tags of target objects successfully clustered with said reference tag into said first region tag cluster, and preferably, said clustering comprises extracting signal characteristics of said collected tags of the target objects for clustering.

7. The method according to claim 5 or 6, wherein said second sensor is an array antenna.

8. The method according to any one of claims 5 to 7, further comprising:
detecting, by a fourth sensor provided in said first region, entry of person into said first region; and
activating the second sensor and/or the first sensor to collect tags in response to detection of entry of person into said first region.

## Patentansprüche

1. Vorrichtung zum Detektieren eines Objekts, **dadurch gekennzeichnet, dass** sie umfasst:
einen ersten Sensor (101, 201), welcher in einem ersten Bereich eines unbemannten Einzelhandelsgeschäfts bereitgestellt ist, wobei das unbemannte Einzelhandelsgeschäft verschiedene Bereiche aufweist, umfassend den ersten Bereich und einen zweiten Bereich, wobei der erste Bereich ein Zahlbereich ist und der zweite Bereich ein Bereich ist, in welchem noch gezahlt werden muss;
einen zweiten Sensor (102, 202), welcher in dem zweiten Bereich bereitgestellt ist und dazu eingerichtet ist, Etiketten von Zielobjekten in dem ersten Bereich und dem zweiten Bereich zu erfassen;
eine erste Verarbeitungseinheit (103, 203), welche dazu eingerichtet ist, die durch den zweiten Sensor erfassten Etiketten von Zielobjekten zu klassifizieren, um einen Erster-Bereich-Etiketten-Cluster und einen Zweiter-Bereich-Etiketten-Cluster zu erhalten, wobei der Erster-Bereich-Etiketten-Cluster Etiketten von Zielobjekten in dem ersten Bereich umfasst und der Zweiter-Bereich-Etiketten-Cluster Etiketten von Zielobjekten in dem zweiten Bereich umfasst,
wobei der erste Sensor (101, 201) dazu eingerichtet ist, die Etiketten der Zielobjekte in dem Erster-Bereich-Etiketten-Cluster auf Grundlage eines Klassifizierungsergebnisses der ersten Verarbeitungseinheit (103, 203) zu detektieren, damit in dem ersten Bereich eine Zahlung für die Zielobjekte in dem Erster-Bereich-Etiketten-Cluster durchgeführt werden kann,
wobei die Vorrichtung ferner umfasst:
einen dritten Sensor (204), welcher in einem dritten Bereich des unbemannten Einzelhandelsgeschäfts bereitgestellt ist und dazu eingerichtet ist, Etiketten von Zielobjekten in dem dritten Bereich zu erfassen, wobei der dritte Bereich ein Bereich im Geschäft ist;
eine zweite Verarbeitungseinheit (205), welche dazu eingerichtet ist, auf Grundlage der durch den dritten Sensor erfassten Etiketten zu bestimmen, ob sich die Zielobjekte in dem dritten Bereich bewegt haben, wobei die zweite Verarbeitungseinheit (205) ferner dazu eingerichtet ist, eine Clusterbildung an Etiketten von Zielobjekten durchzuführen, welche sich bewegt haben, und ein Ergebnis der Clusterbildung als eine Hilfsinformation zu nehmen, und wobei die erste Verarbeitungseinheit (103, 203) ferner dazu eingerichtet ist, auf Grundlage der Hilfsinformation der zweiten Verarbeitungseinheit (205) die Etiketten der Zielobjekte in dem ersten Bereich zu filtern, um den Erster-Bereich-Etiketten-Cluster zu erhalten.

2. Vorrichtung nach Anspruch 1, ferner umfassend ein Referenzetikett, welches in dem ersten Bereich bereitgestellt ist, wobei die erste Verarbeitungsvorrichtung (103, 203) ferner dazu eingerichtet ist, auf Grundlage des Referenzetiketts eine Clusterbildung an den erfassten Etiketten der Zielobjekte durchzuführen und Etiketten von Zielobjekten, welche erfolgreich mit dem Referenzetikett geclustert worden sind, in den Erster-Bereich-Etiketten-Cluster zu klassifizieren, und vorzugsweise wobei die erste Verarbeitungseinheit (103, 203) ferner dazu eingerichtet ist, Signalcharakteristiken der erfassten Etiketten der Zielobjekte für eine Clusterbildung zu extrahieren.

3. Vorrichtung nach Anspruch 1 oder 2, wobei der zweite Sensor (102, 202) eine Array-Antenne ist.

4. Vorrichtung nach einem der Ansprüche 1 bis 3, ferner umfassend:
einen vierten Sensor (206), welcher in dem ersten Bereich bereitgestellt ist und dazu eingerichtet ist, einen Eintritt einer Person in den ersten Bereich zu detektieren,
wobei der vierte Sensor (206) ferner dazu eingerichtet ist, den zweiten Sensor (102, 202) und/oder den ersten Sensor (101, 201) zu aktivieren, um die Etiketten auf eine Detektion eines Eintritts einer Person in den ersten Bereich hin zu erfassen.

5. Verfahren zum Detektieren eines Objekts, **dadurch gekennzeichnet, dass** es umfasst:
Erfassen (301), durch einen zweiten Sensor, welcher in einem zweiten Bereich eines unbemannten Einzelhandelsgeschäfts bereitgestellt ist, von Etiketten von Zielobjekten in einem ersten Bereich und dem zweiten Bereich, wobei das unbemannte Einzelhandelsgeschäft verschiedene Bereiche aufweist, umfassend den ersten Bereich und den zweiten Bereich, wobei der erste Bereich ein Zahlbereich ist und der zweite Bereich ein Bereich ist, in welchem noch gezahlt werden muss;
Klassifizieren (302) der durch den zweiten Sensor erfassten Etiketten der Zielobjekte, um einen Erster-Bereich-Etiketten-Cluster und einen Zweiter-Bereich-Etiketten-Cluster zu erhalten, wobei der Erster-Bereich-Etiketten-Cluster Etiketten von Zielobjekten in dem ersten Bereich umfasst und der Zweiter-Bereich-Etiketten-Cluster Etiketten von Zielobjekten in dem zweiten Bereich umfasst; und
Detektieren (303), durch einen ersten Sensor, welcher in dem ersten Bereich bereitgestellt ist, der Etiketten der Zielobjekte in dem Erster-Bereich-Etiketten-Cluster auf Grundlage eines Klassifizierungsergebnisses, damit in dem ersten Bereich eine Zahlung für die Zielobjekte in dem Erster-Bereich-Etiketten-Cluster durchgeführt werden kann,
wobei das Verfahren ferner umfasst:
Erfassen (401), durch einen dritten Sensor, welcher in einem dritten Bereich des unbemannten Einzelhandelsgeschäfts bereitgestellt ist, von Etiketten von Zielobjekten in dem dritten Bereich, wobei der dritte Bereich ein Bereich im Geschäft ist;
Bestimmen (402), ob sich die Zielobjekte in dem dritten Bereich bewegt haben, auf Grundlage der durch den dritten Sensor erfassten Etiketten, wobei das Verfahren ferner umfasst:
Durchführen (403) einer Clusterbildung an Etiketten von Zielobjekten, welche sich bewegt haben, und Nehmen eines Ergebnisses der Clusterbildung als eine Hilfsinformation, und wobei das Klassifizieren der durch den zweiten Sensor erfassten Etiketten der Zielobjekte in dem ersten Bereich, um den Erster-Bereich-Etiketten-Cluster zu erhalten, ferner umfasst:
Filtern der Etiketten der Zielobjekte in dem ersten Bereich auf Grundlage der Hilfsinformation, um den Erster-Bereich-Etiketten-Cluster zu erhalten.

6. Verfahren nach Anspruch 5, ferner umfassend:
Durchführen einer Clusterbildung an den erfassten Etiketten der Zielobjekte auf Grundlage eines Referenzetiketts, welches in dem ersten Bereich bereitgestellt ist, und Klassifizieren von Etiketten von Zielobjekten, welche erfolgreich mit dem Referenzetikett geclustert worden sind, in den Erster-Bereich-Etiketten-Cluster, und vorzugsweise wobei die Clusterbildung ein Extrahieren von Signalcharakteristiken der erfassten Etiketten der Zielobjekte für eine Clusterbildung umfasst.

7. Verfahren nach Anspruch 5 oder 6, wobei der zweite Sensor eine Array-Antenne ist.

8. Verfahren nach einem der Ansprüche 5 bis 7, ferner umfassend:
Detektieren, durch einen vierten Sensor, welcher in dem ersten Bereich bereitgestellt ist, eines Eintritts einer Person in den ersten Bereich; und
Aktivieren des zweiten Sensors und/oder des ersten Sensors, um in Reaktion auf eine Detektion eines Eintritts einer Person in den ersten Bereich Etiketten zu erfassen.

## Revendications

1. Appareil pour détecter un objet, **caractérisé en ce qu'**il comprend :
un premier capteur (101, 201) prévu dans une première région d'un magasin de détail sans personnel, dans lequel le magasin de détail sans personnel présente différentes régions comprenant ladite première région et une deuxième région, dans lequel la première région est une région de paiement, et la deuxième région est une région à payer ;
un deuxième capteur (102, 202) prévu dans la deuxième région et configuré pour collecter des étiquettes d'objets cibles dans la première région et la deuxième région ;
une première unité de traitement (103, 203) configurée pour classer les étiquettes d'objets cibles collectées par ledit deuxième capteur, pour obtenir un groupe d'étiquettes de première région et un groupe d'étiquettes de deuxième région, dans lequel ledit groupe d'étiquettes de première région comprend les étiquettes d'objets cibles dans ladite première région, et ledit groupe d'étiquettes de deuxième région comprend les étiquettes d'objets cibles dans ladite deuxième région,
dans lequel ledit premier capteur (101, 201) est configuré pour détecter les étiquettes des objets cibles dans ledit groupe d'étiquettes de première région sur la base d'un résultat de classification de ladite première unité de traitement (103, 203) afin qu'un paiement soit réalisé, dans la première région, pour les objets cibles dans ledit groupe d'étiquettes de première région,
dans lequel l'appareil comprend en outre :
un troisième capteur (204) prévu dans une troisième région du magasin de détail sans personnel et configuré pour collecter les étiquettes d'objets cibles dans ladite troisième région, dans lequel ladite troisième région est une région en magasin ;
une deuxième unité de traitement (205) configurée pour déterminer si les objets cibles dans ladite troisième région se sont déplacés sur la base des étiquettes collectées par ledit troisième capteur, dans lequel la deuxième unité de traitement (205) est en outre configurée pour réaliser un regroupement sur les étiquettes d'objets cibles qui se sont déplacés, et considérer un résultat du regroupement comme une information auxiliaire, et dans lequel la première unité de traitement (103, 203) est en outre configurée pour filtrer les étiquettes des objets cibles dans ladite première région sur la base de l'information auxiliaire de la deuxième unité de traitement (205), pour obtenir ledit groupe d'étiquettes de première région.

2. Appareil selon la revendication 1, comprenant en outre une étiquette de référence prévue dans ladite première région, dans lequel la première unité de traitement (103, 203) est en outre configurée pour réaliser un regroupement sur les étiquettes collectées des objets cibles sur la base de ladite étiquette de référence, et classer les étiquettes d'objets cibles regroupées avec succès avec ladite étiquette de référence dans ledit groupe d'étiquettes de première région, et de préférence, ladite première unité de traitement (103, 203) est en outre configurée pour extraire des caractéristiques de signal des étiquettes collectées des objets cibles pour le regroupement.

3. Appareil selon la revendication 1 ou 2, dans lequel ledit deuxième capteur (102, 202) est une antenne réseau.

4. Appareil selon l'une quelconque des revendications 1 à 3, comprenant en outre :
un quatrième capteur (206) prévu dans la première région et configuré pour détecter l'entrée d'une personne dans ladite première région,
dans lequel ledit quatrième capteur (206) est en outre configuré pour activer ledit deuxième capteur (102, 202) et/ou ledit premier capteur (101, 201) pour collecter les étiquettes lors de la détection de l'entrée d'une personne dans ladite première région.

5. Procédé pour détecter un objet, **caractérisé en ce qu'**il comprend :
la collecte (301), par un deuxième capteur prévu dans une deuxième région d'un magasin de détail sans personnel, d'étiquettes d'objets cibles dans une première région et la deuxième région, dans lequel le magasin de détail sans personnel présente différentes régions comprenant ladite première région et la deuxième région, dans lequel la première région est une région de paiement, et la deuxième région est une région à payer ;
le classement (302) des étiquettes des objets cibles collectées par ledit deuxième capteur, pour obtenir un groupe d'étiquettes de première région et un groupe d'étiquettes de deuxième région, dans lequel ledit groupe d'étiquettes de première région comprend les étiquettes d'objets cibles dans la première région, et ledit groupe d'étiquettes de deuxième région comprend les étiquettes d'objets cibles dans ladite deuxième région ; et
la détection (303), par un premier capteur prévu dans ladite première région, des étiquettes des objets cibles dans ledit groupe d'étiquettes de première région sur la base d'un résultat de classification afin qu'un paiement soit réalisé, dans la première région, pour les objets cibles dans ledit groupe d'étiquettes de première région,
dans lequel le procédé comprend en outre :
la collecte (401), par un troisième capteur prévu dans une troisième région du magasin de détail sans personnel, d'étiquettes d'objets cibles dans ladite troisième région, dans lequel ladite troisième région est une région en magasin ;
la détermination (402) si les objets cibles dans ladite troisième région se sont déplacés sur la base des étiquettes collectées par ledit troisième capteur, dans lequel le procédé comprend en outre :
la réalisation (403) d'un regroupement sur des étiquettes d'objets cibles qui se sont déplacés, et la considération d'un résultat du regroupement comme une information auxiliaire, et dans lequel le classement des étiquettes des objets cibles collectées par ledit deuxième capteur pour obtenir le groupe d'étiquettes de première région comprend en outre :
la filtration des étiquettes des objets cibles dans ladite première région sur la base de ladite information auxiliaire pour obtenir ledit groupe d'étiquettes de première région.

6. Procédé selon la revendication 5, comprenant en outre :
la réalisation d'un regroupement sur les étiquettes collectées des objets cibles sur la base d'une étiquette de référence prévue dans ladite première région, et le classement des étiquettes d'objets cibles regroupées avec succès avec ladite étiquette de référence dans ledit groupe d'étiquettes de première région, et de préférence, ledit regroupement comprend l'extraction de caractéristiques de signal desdites étiquettes collectées des objets cibles pour le regroupement.

7. Procédé selon la revendication 5 ou 6, dans lequel ledit deuxième capteur est une antenne réseau.

8. Procédé selon l'une quelconque des revendications 5 à 7, comprenant en outre :
la détection, par un quatrième capteur prévu dans ladite première région, de l'entrée d'une personne dans ladite première région ; et
l'activation du deuxième capteur et/ou du premier capteur pour collecter les étiquettes en réponse à la détection de l'entrée d'une personne dans ladite première région.
